# EUROPÄISCHE PATENTSCHRIFT

(11) **EP 0 476 500 B1**
(45) Veröffentlichungstag und Bekanntmachung des Hinweises auf die Patenterteilung: **07.01.1998**
(21) Anmeldenummer: 91115358.3
(22) Anmeldetag: 11.09.1991
(51) Int. Cl.: A01B 59/04, A01B 61/02

(54) **Kupplung eines Mähwerks an den Rüstbock eines Fahrzeugs**
Coupling of a mower to the frame of a vehicle
Accouplement d'une faucheuse à la console d'attache d'un véhicule

(30) Priorität: 11.09.1990 DE 4028777
(43) Veröffentlichungstag der Anmeldung: 25.03.1992
(73) Patentinhaber: Maschinen-Mohr Inh.: Dipl.-Ing. Peter Wicke, 91792 Ellingen (DE)
(72) Erfinder: Mohr, Hermann, W-8836 Ellingen (DE)
(74) Vertreter: Matschkur, Götz, Lindner Patent- und Rechtsanwälte

(56) Entgegenhaltungen:
- DE-A- 3 632 871
- DE-C- 2 749 097
- FR-A- 2 365 280
- US-A- 4 441 306

## Beschreibung

Die Erfindung richtet sich auf eine Kupplung, die an ein Mähwerk einerseits und an den Rüstbock eines Nutzfahrzeugs andererseits gekuppelt ist, um diese Teile beweglich miteinander zu verbinden, umfassend ein oder mehrere, zwischen Mähwerk und Rüstbock angeordnete Kupplungselemente mit je einem oder mehreren Bewegungselementen zum beweglichen Anschluß an einem der miteinander zu verbindenden Maschinenteile, sowie mit je einem Dämpfer- und/oder Federelement, das einer Bewegung des betreffenden Kupplungselements gegenüber dem betreffenden Maschinenteil entgegenwirkt.

Beim Einsatz von Mähwerk-Fahrzeugen zur Landschaftspflege werden während der Fahrt Hindernisse, die im Mähgut verborgen liegen, oft nicht rechtzeitig erkannt. Dann können beim Anfahren des Hindernisses starke Stöße auf das Mähwerk entstehen, die sich auf die Aufhängung und den Rüstbock des Fahrzeuges übertragen. Bei einer nicht-elastischen, starren Ankopplung des Mähwerks an das Nutzfahrzeug, wie sie bspw. in der DE-OS 36 32 871 offenbart ist, können diese Stöße zu Verformungen, Verbiegungen und mithin zu beträchtlichen Schäden führen.

Aus der US-PS 4,441,306 ist ein an der Frontseite eines Antriebsfahrzeugs angeordnetes Mähgerät bekannt, das durch von dem Fahrzeug nach vorne auskragende, hydraulisch höhenverstellbare Deichseln getragen wird und ausschließlich an seiner Vorderkante zusätzliche Laufrollen aufweist. Aufgrund ihrer Tragfunktion sind die Deichseln weitgehend starr, so daß trotz einer minimalen Verschwenkmöglichkeit des Mähgeräts gegenüber den Deichseln bei einem Stoß nur eine ganz geringe Ausweichbewegung möglich ist.

Deshalb sieht die DE-PS 27 49 097, welche die Merkmale des Oberbegriffes des Anspruchs 1 zeigt, eine Vorrichtung zum Aufhängen eines Mähwerks an der 3-Punkt-Anbauvorrichtung im Bereich der Vorderseite eines Schleppers vor, wobei das Mähwerk an den Unterlenkern derart angeordnet ist, daß es um eine horizontale Achse verschwenken kann. Da sich die Unterlenker etwa auf Höhe der Radachse des Schleppers befinden, liegen sie deutlich oberhalb des am weitesten nach vorne ragenden Gehäuseteils des Mähwerks, welches während des Betriebs entlang der Erdoberfläche vorangeschoben wird. Trifft dieses Gehäuse nun auf ein Hindernis, so kann es um die obige, horizontale Achse verschwenken und dabei teilweise nach hinten ausweichen. Diese Ausweichbewegung wird gedämpft durch eine Zugfeder, welche den oberhalb der horizontalen Schwenkachse liegenden Bereich des Mähwerkrahmens mit der Vorderseite des Schleppers verbindet. Bei einem Verkippen des Mähwerkrahmens infolge eines Stoßes auf den unteren Gehäuseteil wird die Zugfeder gedehnt, so daß die dadurch erhöhte Federkraft die Schwenkbewegung des Mähwerkgehäuses dämpft. Diese Anordnung erlaubt zwar einerseits ein Verkippen des Mähwerksgehäuses um die horizontale Schwenkachse, um Bodenunebenheiten nachgeführt werden zu können, und um ggf. eine Ausweichbewegung ausführen zu können. Im Rahmen einer derartigen Ausweichbewegung muß das Mähwerk jedoch neben der nach rückwärts gerichteten Bewegungskomponente auch eine Bewegung nach unten ausführen, wobei die Messer des Mähwerks in den Boden eindringen und dabei häßliche, braune Flecken in der zu mähenden Landschaft erzeugen. Diese Kupplungsvorrichtung ist demnach für Mähwerke ungeeignet, da diese zwar zum Nachfahren von Bodenunebenheiten um eine horizontale Achse kippbar an einem Schlepper angeordnet sein sollten, wogegen jedoch bei einer Ausweichbewegung infolge eines Stoßes der Abstand des Mähwerks zum Erdboden unverändert bleiben sollte.

Hier kann auch eine Anordnung, wie sie in der FR-A-2 365280 offenbart ist, keine Verbesserung bringen. Denn dort ist eine echte 3-Punkt-Befestigung an der Zugmaschine vorgesehen, unter Einbeziehung von Ober- sowie Unterlenkern. Zu diesem Zweck ist ein Kupplungselement vorgesehen, das die Form eines die freien Enden der Ober- und Unterlenker starr miteinander verbindenden Bügels aufweist, der wiederum in seinem unteren Bereich an der Arbeitsmaschine um eine horizontale Achse verdrehbar angelenkt ist, während der davon beabstandete, obere Bereich dieses Kupplungselements über ein zwischengeschaltetes, lineare Relativbewegungen zwischen dem Arbeitsgerät und dem Kupplungselement erlaubendes und gleichzeitig dämpfendes Element mit dem oberen Bereich der Arbeitsmaschine verbunden ist. Hierdurch ergibt sich eine Anordnung, die weitgehend starr ist und der Arbeitsmaschine ausschließlich extrem kurze Ausgleichsbewegungen erlaubt. Diese Form der Kupplung korrespondiert mit dem Zweck der solchermaßen angekuppelten Arbeitsmaschine, die ausschließlich zum Grubbern, d.h., zum pflugähnlichen Auflockern des Erdreichs dient. Hierbei ist im Gegensatz zu Mähwerken nicht die Einhaltung eines konstanten Abstands zur Erdoberfläche notwendig, sondern vielmehr das ständige Eingreifen des Grubberwerkzeugs in das Erdreich, wobei eine Variation der Eindringtiefe weitgehend unkritisch ist. Die Dämpfung der geringfügigen Relativbewegungen zwischen dem Grubber und der Zugmaschine hat einzig den Zweck, beim Auftreffen des Grubbers auf größere Steine oder Felsbrocken die daraus resultierenden Stöße gegenüber der Zugmaschine so weit als möglich abzudämpfen, damit der Fahrer nicht unnötig durchgerüttelt wird. Da infolge der relativ starren Ankopplung eine Anpassung des Arbeitsgeräts an Bodenunebenheiten nicht möglich ist, kann diese Kupplung nicht zum Ankuppeln von Mähwerken verwendet werden. Darüber hinaus vollführt auch bei dieser Anordnung der untere Teil der Arbeitsmaschine bei einem Stoß nicht nur eine horizontale Ausweichbewegung, sondern erfährt darüber hinaus auch eine vertikale Bewegungskomponente, die wiederum nachteilige Auswirkungen auf das Mähergebnis hat.

Aus diesen Nachteilen des vorbekannten Stands der Technik resultiert das die Erfindung initiierende Problem, die Ankopplung eines Mähwerks an ein Nutzfahrzeug derart zu gestalten, daß einerseits eine Kippmöglichkeit des Mähwerks gegeben ist, damit bei Geländeunebenheiten eine automatische Anpassung erfolgen kann; andererseits soll die Möglichkeit eröffnet werden, daß das Mähwerk bei einem Stoß entgegen der Fahrtrichtung elastisch nachgeben kann, um eine Beschädigung zu vermeiden; wobei während einer derartigen Ausweichbewegung die Arbeitshöhe nicht verändert werden soll, damit ein optimales Mähergebnis erzielt wird.

Zur Lösung wird erfindungsgemäß vorgeschlagen, an dem Kupplungselement einer gattungsgemäßen Kupplung ein Drehgelenk mit einer gegenüber der Fahrtrichtung schräg oder quer verlaufenden Achse zur verschwenkbaren Anlenkung des Kupplungselements an einer einzigen Stelle des jeweils anderen Maschinenteils derart anzuordnen, daß das Mähwerk bei einem Stoß entgegen der Fahrtrichtung gegenüber dem Rüstbock eine etwa translatorische, durch das Dämpfer- und/oder Federelement gedämfte Ausgleichsbewegung ausführt, ansonsten in seiner Lage jedoch weitgehend unverändert bleibt.

Durch eine derartige Anlenkung erhält das Kupplungsgerät zusätzlich zu der Bewegungsfreiheit gegenüber einem Maschinenteil einen rotatorischen Freiheitsgrad gegenüber dem jeweils anderen Maschinenteil, der ihm Ausgleichbewegungen beim Anstoßen an ein Hindernis ermöglicht, ohne daß dabei die Lage, insbesondere Höhe des Mähwerks, verändert wird. Indem darüber hinaus diese Ausgleichsbewegungen mit Federkräften gekoppelt sind, werden diese Ausgleichsbewegungen bzw. die Hindernis-Stöße beträchtlich gedämpft, so daß die Gefahr von Beschädigungen des Mähwerks, dessen Gehäuserahmens, dessen Ankupplung bzw. Aufhängung usw. weitgehend vermieden ist. Hierbei wird von der eingangs erläuterten, bekannten Aufhängevorrichtung gemäß DE-PS 27 49 097 ausgegangen: Die dortige, einzige Anlenkachse 5 ist gegenüber dem darum verschwenkbaren Anbaugerät radial festgelegt bzw. unverrückbar. Stößt das Anbaugerät auf Bodenunebenheiten oder Hindernisse, werden resultierende Stoßkräfte unmittelbar auf die relativ empfindliche Anlenkachse 5 und insbesondere deren Lagerteile übertragen, was zu deren Beschädigung führen kann. Um in dieser Hinsicht die Zuverlässigkeit und Betriebssicherheit in konstruktiv einfacher Weise zu erhöhen, wird bei einem Gerät zum Kuppeln eines Mähwerks, insbesondere eines Sichelmähwerks oder sonstigen maschinellen Aggregats an den Rüstbock eines Nutzfahrzeugs, wobei dieses Kupplungsgerät ein erstes Bewegungselement aufweist, das eine Dreh- oder lineare Verschiebebewegung des Maschinenaggregats relativ zum Fahrzeug-Rüstbock ermöglicht, erfindungsgemäß vorgeschlagen, noch ein zweites Bewegungselement vorzusehen, das gegenüber dem ersten derart angeordnet ist, daß mit der Betätigung beider Bewegungselemente die Relativlage des ersten oder zweiten Bewegungselements gegenüber dem Maschinenaggregat verändert wird. Durch die Hinzufügung eines weiteren Bewegungselements wird für das erste Bewegungselement gleichsam ein weiterer, zusätzlicher Freiheitsgrad geschaffen, so daß beispielsweise letzteres sich gegenüber dem angekuppelten Maschinenaggregat verstellen kann, wenn dieses einer Krafteinwirkung durch Bodenunebenheiten oder Hindernisse ausgesetzt ist. Die Anwendung des allgemeinen Prinzips der genannten Erfindungsalternative auf eine Aufhängevorrichtung nach der Vorveröffentlichung DE-PS 27 49 097 bedeutet, daß für die dortige Schwenkachse durch Einfügung eines weiteren Bewegungselements eine zusätzliche Verstellmöglichkeit gegenüber dem Anbaugerät geschaffen wird. So kann das Anbaugerät nicht nur in Umfangsrichtung entsprechend der Schwenkbewegung um die Schwenkachse, sondern auch gegenüber letzterer in radialer Richtung Ausgleichs- und Kompensationsbewegungen beim Stoßen auf eine Bodenunebenheit oder ein Hindernis ausführen. Mit anderen Worten, es wird für das Bewegungselement, im bekannten Ausführungsbeispiel als Aufhänge-Drehachse ausgeführt, ein weiterer Freiheitsgrad derart geschaffen, daß die Lagerkomponenten des Bewegungselements beim Auftreffen auf Hindernissen Ausgleichsbewegungen ermöglichen und mithin im Betrieb geschont werden. Durch die Anlenkung an einer einzigen Stelle bleibt die für Mähgeräte zum Ausgleich von Bodenunebenheiten wichtige Verschwenkmöglichkkeit erhalten.

Dabei liegt es im Rahmen der Erfindung, daß ein Bewegungselement als Linearführung (translatorisches Bewegungselement), als Schwenk-, Biege- oder Drehstelle oder Drehgelenk (rotatorisches Bewegungselement) ausgebildet ist. Ferner kann ein Bewegungselement zur Herbeiführung kombinierter Dreh- und Linearbewegungen ausgeführt sein. So ist mit besonderem Vorteil das zweite, zusätzliche Bewegungselement gleichzeitig als Drehgelenk und Linearführung ausgebildet, so daß für das erste Bewegungselement mehrere, zusätzliche Freiheitsgrade geschaffen werden. Dabei kann eine Biege-, Schwenk- oder Drehstelle in einer Linearführung verschiebbar gelagert sein. Beispielsweise kann die Linearführung ortsfest im Rüstbock ausgebildet sein, während das Drehgelenk ortsfest an dem anzukuppelnden Maschinenaggregat angebracht ist. Stößt letzteres auf externe Hindernisse, beispielsweise Bodenunebenheiten, müssen aufgrund des zweiten rotatorischen Bewegungselements, z.B. in Form des Drehgelenks, die Lagerkomponenten der Linearführung die übertragenen Kräfte nicht voll aufnehmen; diese werden vielmehr durch Ausweich-Schwenkbewegungen des Maschinenaggregats um das Drehgelenk teilweise kompensiert. Die Kompensation läßt sich noch weiter dadurch fördern, daß eine Druck- oder Zugfeder vorgesehen ist, die einer Hin- und Herverschiebung des Drehgelenks oder der Drehstelle entgegengeschaltet ist.

Mit besonderem Vorteil sind ein oder mehrere Dämpfer- und/oder Federelemente vorgesehen, die mit dem ersten und/oder zweiten Bewegungselement derart in Wirkungsverbindung stehen, daß sie einer Verstellung des Maschinenaggregats aus einer Ausgangs- oder Normallage entgegenwirken. Stößt das Maschinenaggregat auf ein externes Hindernis, so werden die von den Bewegungselementen herbeigeführten Bewegungen gedämpft und/oder elastisch umgekehrt und zurückgeführt. Als Konstruktionsteile eignen sich vor allem Gummihohlfedern, Blattfedern, Schraubenfedern und/oder Kegelfedern. Ein weiterer, vorteilhafter Gesichtspunkt ergibt sich dann, wenn das Bewegungselement mit einem Dämpfer und/oder Federelement baulich integriert und/oder einstückig ausgeführt ist. Mit anderen Worten, das Federelement, beispielsweise eine Gummihohlfeder oder eine Schrauben- oder Blattfeder, dient gleichsam zur Realisierung des Bewegungselements und der zugehörigen Freiheitsgrade für das Kupplungsgerät.

Der Vereinfachung der Herstellung sowie der Einsparung von Bauteilen dient es, wenn in Weiterbildung der Erfindung die Bewegungselemente als Verbindungsglieder zum Rüstbock und/oder dem Maschinenaggregat - dort jeweils ortsfest angebracht - ausgeführt sind. Damit können die Bewegungselemente, beispielsweise in Form von Gelenkstellen, gleichsam als Eingriffspunkte zur Befestigung am Maschinenaggregat und/oder Rüstbock des Fahrzeugs dienen.

Die Elastizität und mithin Betriebszuverlässigkeit des Kupplungsgeräts wird noch weiter dadurch gefördert, daß das die Schwenkachse bildende Verbindungsglied im Gelenk radial federnd verstellbar gelagert ist. Eine konkrete Realisierung dieses Gedankens besteht darin, das Verbindungsglied mit einem Gummilager zu umgeben.

In Weiterbildung der Erfindung ist ein Sensor vorgesehen, der die Schwenkbewegungen und/oder korrespondierenden Federelement-Auslenkungen detektiert und damit korrespondierend ein elektrisches Schaltsignal erzeugt. Das Schaltsignal kann beispielsweise mit einem Warngerät, beispielsweise einer Hupe, gekoppelt sein, welches bei Ansteuerung durch das Schaltsignal den Fahrer über das Anstoßen an ein Hindernis informiert. Er kann daraufhin das Fahrzeug sofort stoppen. Konkrete Realisierungsmöglichkeiten dieses Gedankens bestehen darin, einen elektromechanischen Schalter am Gelenk oder am Federelement anzubringen, der durch mechanische Dreh- oder Auslenkbewegungen der genannten Elemente einen elektrischen Kontakt schließt.

Zur konstruktiven Realisierung liegt es im Rahmen der Erfindung, das Kupplungsgerät mit zwei miteinander starr verbundene Schenkel auszubilden, welche in ihrem Verbindungsbereich mit einem gemeinsamen Tragelement für den Eingriff am Rüstbock versehen sind; dabei sind jeweils am Maschinenaggregat das freie Ende des ersten Schenkels über das Gelenk drehbar, und das freie Ende des zweiten Schenkels über das Federelement verstellbar angeordnet. Durch diese etwa V- oder U-förmig verbundenen Schenke wird sowohl dem Gelenk als auch dem Federelement jeweils ein Angriff- bzw. Wirkungspunkt zugeordnet, woraus der gefedert gedämpfte Schwenkmechanismus im Kupplungsgerät resultiert.

In weiterer Realisierung des genannten Gedankens ist das Federelement als hohlzylindrische Gummifeder und/oder Schraubenfeder ausgeführt, die an ihrem einen Stirnende mit dem Maschinenaggregat, insbesondere Mähwerk, und an ihrem anderen Stirnende mit dem zweiten Schenkel verbunden ist.

Die genannten hohlzylindrischen Gummifedern sind auf dem Markt als sogenannte "Gummihohlfedern" erhältlich. Ihr Einsatz als Federelement für das erfindungsgemäße Kupplungsgerät ist vorliegend deshalb besonders vorteilhaft, weil sie elastisch federnde und dämpfende Eigenschaften mit einem breiten Anwendungsbereich kombinieren. In diesem Zusammenhang besteht eine zweckmäßige Ausbildung der Erfindung darin, zum zweiten Schenkel etwa parallel zur Schwenkachse des Kupplungsgeräts vorspringende Boden- und Seitenwände (Vorder- und Rückwand) vorzusehen, welche die Schrauben- oder Gummifeder an ihrer unteren Stirnseite und an ihrem (zylindrischen) Außenmantel untergreifen bzw. umfassen, wobei die Bodenwand der Stirnseite und die Seitenwände dem Außenmantel zugeordnet sind; die noch verbleibende obere Stirnseite der Schrauben- oder Gummifeder ist vom einen Ende einer Schraubverbindung beaufschlagt, die durch die zylindrischen Innen-Hohlräume der Schrauben- oder Gummifeder und die Bodenwand des zweiten Schenkels geführt und mit dem Maschinenaggregat verbunden ist. Die Seitenwände und die Bodenwand bilden bei dieser Ausführung eine stabile Einfassung und Führung der Federelemente.

Um das Mähwerk oder sonstige maschinelle Aggregat am Rüstbock oder an der Dreipunktaufhängung des Fahrzeugs leicht und stabil anbringen zu können, sind in Weiterbildung der Erfindung mehrere der genannten Schenkelanordnungen - Schenkelverbunde - vorgesehen, die bezüglich einer schräg oder quer zur Schwenkachse verlaufenden (gedachten) Mittel-ebene symmetrisch angeordnet sind. Dabei kann in besonders vorteilhafter Ausbildung das Tragelement als Verbindungsbolzen ausgeführt, der durch zwei Schenkelverbunde - insbesondere durch deren Scheitelbereiche zweier zusammentreffender Schenkel - geführt ist. Hierdurch wird eine günstige Angriffsmöglichkeit für eine hydraulisch heb- und senkbare Dreipunktaufhängung od. dgl., die das Tragelement hakenartig untergreifen kann, geschaffen.

Besonders vorteilhaft ist es, wenn ein Haken- oder Gabelelement des Rüstbocks oder der Dreipunktaufhängung am Fahrzeug zwischen zwei Schenkelverbunde am Tragelement angreifen kann. Dem dient eine weitere Ausbildung der Erfindung, nach welcher ein Distanzstück vorgesehen ist, das jeweils an einer der einander zugewandten Innenseiten einander gegenüberliegender Schenkelverbunde anliegt. In dieser Hinsicht besteht nach einer weiteren Erfindungsausbildung die Möglichkeit, daß das Gelenk gleichzeitig als (weiteres) Distanzstück fungiert, indem es zwischen den jeweils ersten Schenkeln zweier gegenüberliegender Schenkelverbunde angeordnet ist. Dabei ist das Gelenk zweckmäßig mit einer Schraubverbindung versehen bzw. durchsetzt, welche die Schwenkachse für das Kupplungsgerät bildet, an seinen Enden jeweils durch eine Bohrung der beiden ersten Schenke gegenüberliegender Schenkelverbunde geführt ist und so die Schenkelverbunde hintergreift.

Im Zusammenhang mit der oben angenannten Anschraubung der Federelemente, insbesondere der Schrauben- oder Gummifedern, sind die entsprechenden Schraubverbindungen mit Vorteil miteinander verstrebt, so daß ein mechanisch fester und stabiler Zusammenhalt auch von unterschiedlichen Schenkelverbunden gegeben ist. Dies ist insbesondere dadurch realisiert, daß die Schraubverbindungen zweier paarweise symmetrisch angeordneter Schrauben- oder Gummifedern, die zu unterschiedlichen Schenkelverbunden gehören, durch eine das Mähwerk oder Maschinenaggregat untergreifende Stange oder Strebe verbunden sind. M.a.W., diese Stange oder Strebe, die zur Bildung eines gegenüber der Fahrtrichtung stabilisierten Halts vorzugsweise parallel zur Schwenkachse bzw. quer zur Fahrtrichtung verläuft, weist an ihren Enden gleichsam wie Zinken einer Gabel abstehende Stäbe auf, welche die Gummifedern durchsetzen und an ihren freien Enden mit Schraubgewinden für den Eingriff von Muttern versehen sind.

Weitere Merkmale, Einzelheiten und Vorteile der Erfindung ergeben sich aus der nachfolgenden Beschreibung bevorzugter Ausführungsbeispiele der Erfindung sowie anhand der Zeichnung. Darin zeigen jeweils schematisch
- Fig. 1: eine Vorderansicht auf ein erfindungsgemäßes Kupplungsgerät etwa entgegen der Fahrtrichtung,
- Fig. 2: eine Seitenansicht etwa gemäß der Richtung II in Fig. 1,
- Fig. 3: eine Draufsicht etwa gemäß Richtung III in Fig. 1 oder 2,
- Fig. 4 - 6: den Fig. 1 - 3 entsprechende Ansichten, wobei die (an sich) nicht sichtbaren Linien gestrichelt gezeichnet sind,
- Fig. 7 u. 8: in jeweils schematischer Seitenansicht die Wirkungsweise des erfindungsgemäßen Kupplungsgeräts,
- Fig. 9 - 11: den Fig. 5, 7 und 8 entsprechende Darstellungen eines weiteren Ausführungsbeispiels für ein erfindungsgemäßes Kupplungsgerät und
- Fig. 12 und 13: jeweils eine schematische Darstellung entsprechend Fig. 7 weiterer Ausführungsbeispiele der Erfindung.

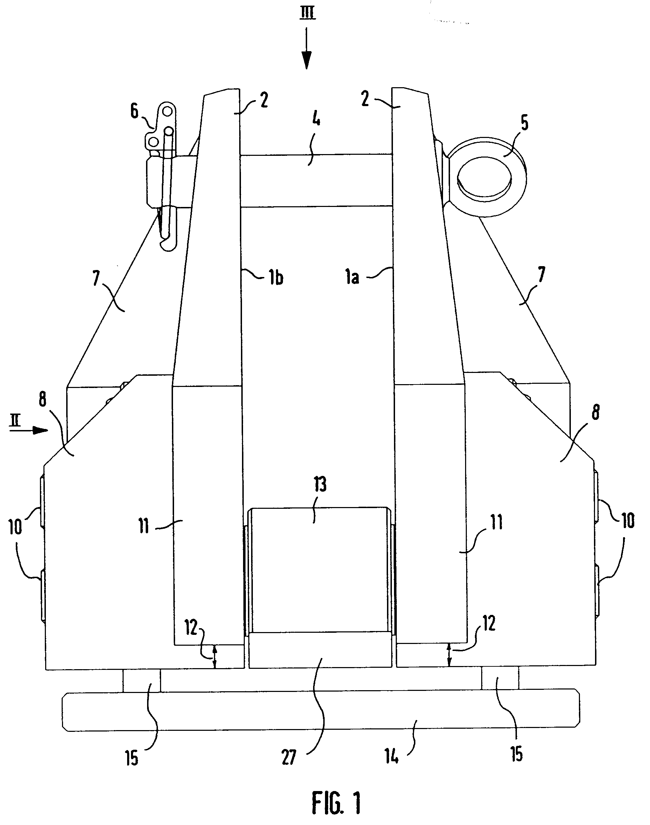

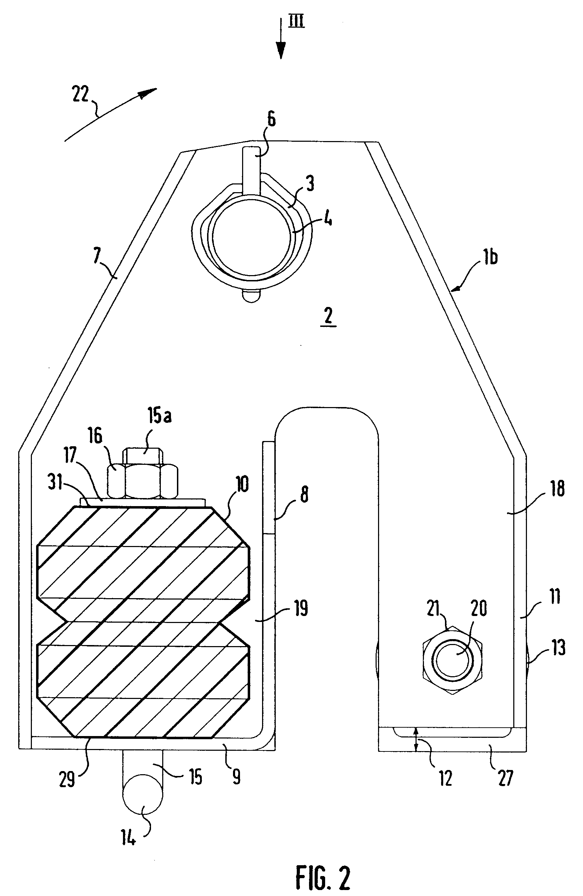

Gemäß Fig. 1 weist das Kupplungsgerät zwei voneinander beabstandete Schenkelverbunde 1a, 1b (in der Ansicht rechts bzw. links) auf. In deren oberen Scheitelbereichen 2 sind jeweils Bohrungen 3 ausgebildet, durch die ein gemeinsamer, als Tragelement und Gelenkstelle dienender Verbindungsbolzen 4 führt. Dieser ist an seinem einen Ende (rechts) mit einem Griffring 5 und an seinem anderen Ende (links) mit einer Verriegelungseinrichtung 6 mit quer verlaufendem Verriegelungsstift versehen. Von den Schenkelverbunden 1a, 1b stehen jeweils eine Vorderwand 8 und eine demgegenüber höhere Rückwand 7 quer zur (senkrecht zur Zeichenebene verlaufenden) Fahrtrichtung nach außen ab. Zwischen jeder Vorder- und Rückwand 8, 7 ist auf einer dazwischen befindlichen Bodenwand 9 eine Gummihohlfeder 10 mit etwa zylindrischer Grundform eingesetzt (vgl. auch Fig. 2 u. 3). An seinem Vorderrand ist jeder Schenkelverbund 1a, 1b L-förmig nach außen gebogen, wobei der kürzere L-Schenkel einen Vorderschurz 11 bildet. Der Vorderschurz 11 ist unten gegenüber der Rückwand 7 oder der Vorderwand 8 um eine Stecke 12 verkürzt, um eine schwenkbare Anlenkung des Kupplungsgeräts über das Gelenk 13 zu gewährleisten. Das Gelenk 13 ist zwischen den Schenkelverbunden 1a, 1b jeweils in deren unteren Bereichen - gleichsam ein Distanzstück bildend - eingesetzt. Ferner ist aus Fig. 1 noch eine (senkrecht zur Fahrtrichtung) verlaufende Querstrebe 14 ersichtlich, von deren beiden Endbereichen jeweils eine Zinke 15 senkrecht nach oben vorspringt.

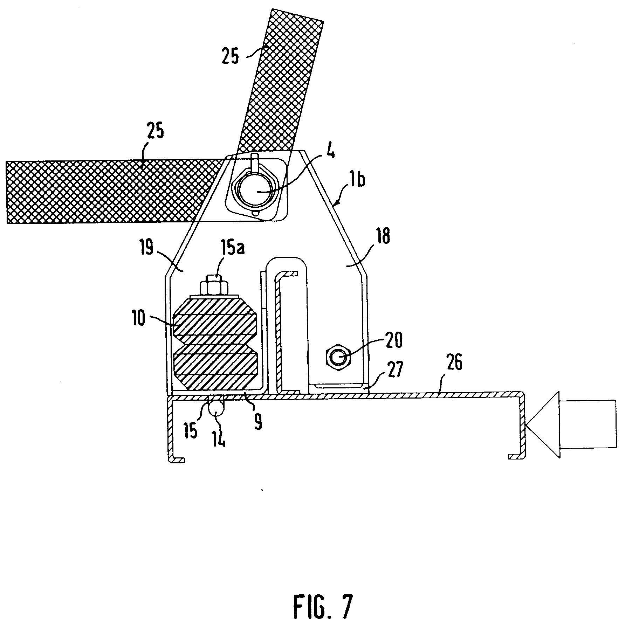

Gemäß Fig. 2 durchsetzt die Zinke 15 die Gummihohlfeder 10 etwa längs deren Mittelachse und weist an ihrem aus der Gummihohlfeder 10 herausstehende Ende 15a eine Mutter 16 auf, die mit dem (nicht sichtbaren) Schraubgewinde des Zinkenendes 15a kämmt. Zwischen der oberen Stirnfläche der Gummihohlfeder 10 und der Unterseite der Mutter 16 ist eine Beilagscheibe 17 eingeklemmt, mittels welcher die Gummihohlfeder 10 nach unten (vor-)gespannt werden kann. In Fig. 2 ist der gemäß Fig. 1 linke Schenkelverbund 1b sichtbar: Er besteht aus einem ersten Schenkel 18 und einem damit im Scheitelbereich 2 starr verbundenen zweiten, breiteren Schenkel 19. An der in Fig. 2 nicht sichtbaren Breitseite des ersten schmäleren Schenkels 18 liegt das Gelenk 13 an, dessen Dreh- oder Schwenkachse mittels einer Schraubverbindung 20 gebildet ist, welche den ersten Schenkel 18 über eine Bohrung durchsetzt und mittels einer Schraubenmutter 21 hintergreift. So ist für den ersten Schenkel eine Anlenkung zum Verschwenken 22 um die Schraubverbindung 20 gebildet (vgl. auch Fig. 7 u.8.).

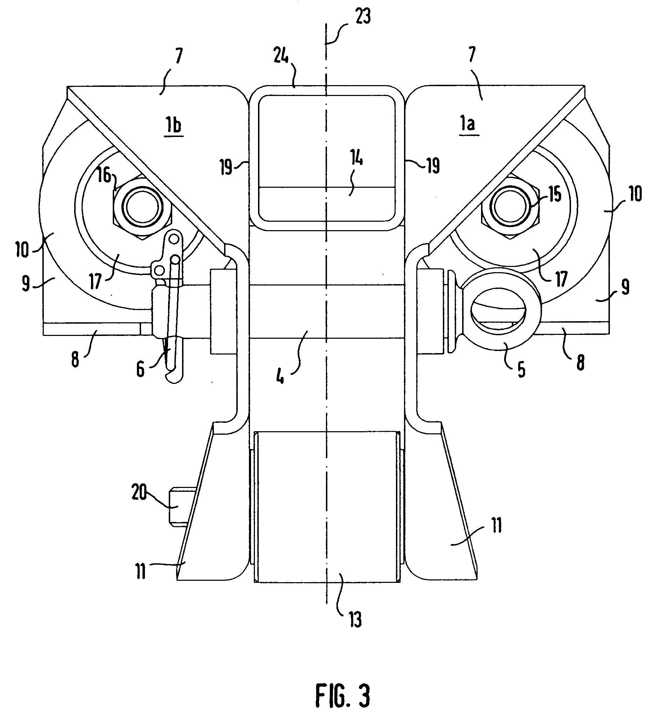

Aus Fig. 3 ist ersichtlich, daß das Kupplungsgerät bzw. deren beide Schenkelverbunde 1a, 1b bezüglich einer gedachten Mittel-ebene 23, die senkrecht zur Zeichenebene der Fig. 3 verläuft, symmetrisch ausgebildet bzw. angeordnet ist. Zur Stabilisierung dieser Anordnung ist zwischen den jeweils zweiten Schenkeln 19 jedes Schenkelverbundes 1a, 1b ein Distanzstück 24 eingesetzt, welches einen der axialen Längserstreckung des Gelenks 13 entsprechenden Abstand zwischen den Schenkelverbunden gewährleistet.

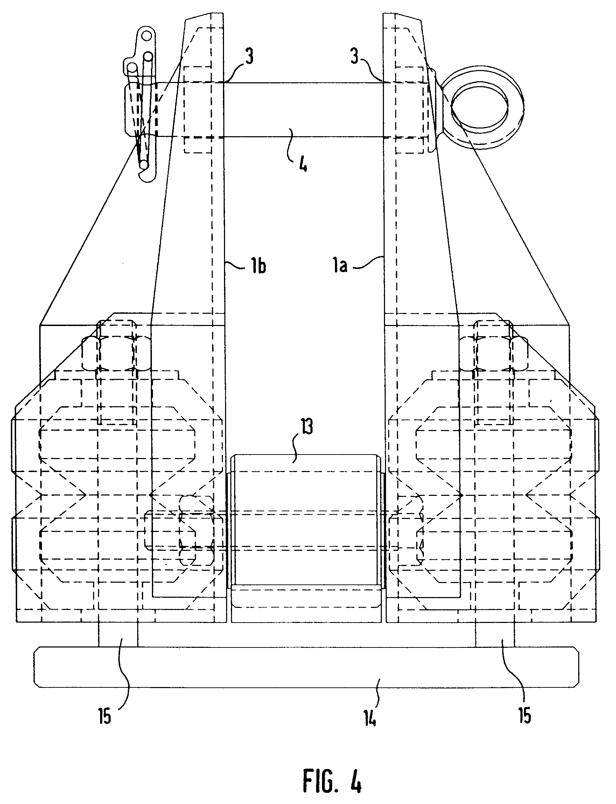

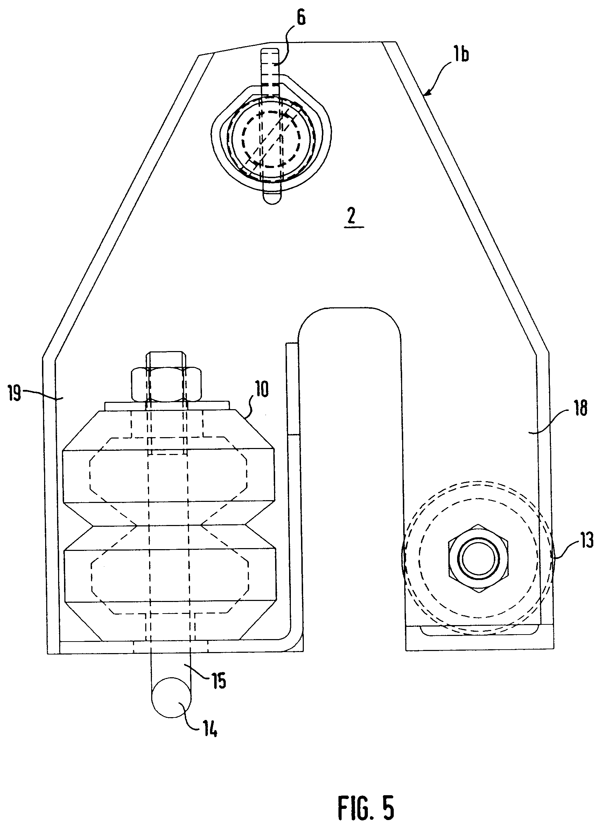

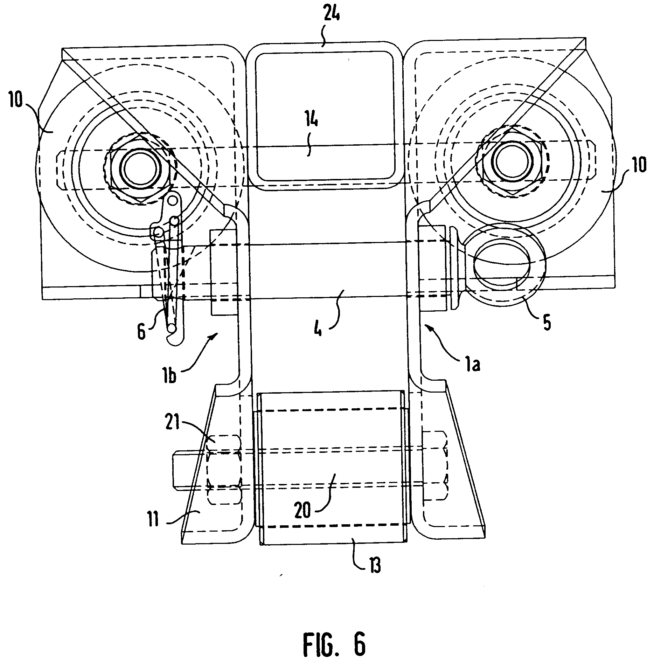

In den Fig. 4 - 6 ist das Kupplungsgerät aus Fig. 1 - 3 noch weiter dadurch verdeutlicht, daß die bei der jeweiligen Ansicht (Vorder-, Seitenansicht, Draufsicht) dem menschlichen Auge nicht sichtbaren Linien gestrichelt gezeichnet sind. Zur Erleichterung des Verständnisses sind einige anhand der Fig. 1 - 3 erläuterten Teile noch mit denselben Bezugszeichen versehen.

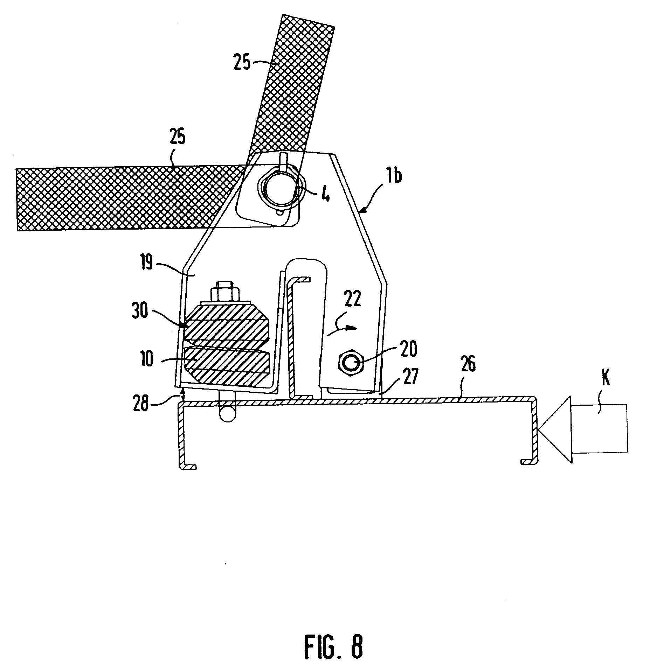

Die Wirkungsweise dieses beispielhaften Kupplungsgeräts sei anhand der Fig. 7 u. 8, die jeweils dieselbe Seitenansicht bei unterschiedlicher Krafteinwirkung zeigen, noch näher erläutert: Das Kupplungsgerät ist über seinen Verbindungsbolzen 4 in einem schematisch angedeuteten Rüstbock 25 eines nicht gezeichneten Fahrzeugs eingehängt und angelenkt. Ferner ist das Kupplungsgerät mit dem Rahmenteil 26 eines Maschinenaggregats oder Mähwerks (nicht gezeichnet) verbunden. Einerseits erfolgt die Verbindung über das Gelenk 13, dessen das Achslagergehäuse tragender Gelenkfuß 27 auf der Oberfläche des Rahmenteils 26 ortsfest fixiert ist. Zum anderen ist das Rahmenteil zwischen der Unterseite der Bodenwand 9 des Schenkelverbundes 1b bzw. des zweiten Schenkels 19 und der Querstrebe 14 angeordnet, wobei deren Zinken 15 durch eine Bohrung im Rahmenteil 26 geführt ist. Durch Anziehen der Schraubenmutter 16 am oberen Ende 15a des Zinkens wird - unter Vorspannung bzw. Zusammendrücken der Hohlfeder 10 - das Rahmenteil 26 zwischen der Gabelanordnung 14, 15 und der Unterseite der Bodenwand 9 eingeklemmt. Stößt während des Fahrbetriebs das Rahmenteil 26 auf ein Hindernis, ist es einer der Fahrtrichtung entgegengesetzten Kraft K ausgesetzt. Der Rüstbock 25 reagiert mit einer entsprechenden Gegenkraft, welche am Verbindungsbolzen 4 angreift. Aufgrund der Anlenkung um die Gelenkachse 20 wird dem Schenkelverbund 1b eine Schwenkbewegung 22 um die Gelenkachse 20 erteilt, wobei der zweite Schenkel 19 vom Rahmenteil 26 wegbewegt bzw. hochgeschwenkt wird. Dabei drückt die Bodenwand 9 von unten auf die Hohlfeder 10, während die Rückwand 7 von der Seite auf die Mantelfläche der Gummihohlfeder 10 gepreßt wird. Die resultierende Verformung der Gummihohlfeder 10 und das den Stoß bzw. die Kraft K ausgleichende Abheben 28 der Bodenwand 9 ist leicht aus einem Vergleich der Fig. 7 und 8 erkennbar. Dabei wird der Vorteil erzielt, daß das Rahmenteil und somit das zugehörige Maschinenaggregat in ihrer Lage wesentlich unverändert bleiben. Die Kraft bzw. der Stoß K wird durch die Gummihohlfeder 10 gleichsam gepuffert und aufgrund der ausgleichenden Abhebbewegung 28 treten keine bleibenden Verformungen im Kupplungsgerät auf.

Ein weiterer Vorteil besteht in der leichten Wartbarkeit: Das Kupplungsgerät kann bei Verschleiß durch Lösen der Verschraubungen 20, 21 bzw. 15, 16, 17 ohne weiteres entfernt und ausgetauscht werden.

Die Erfindung ist nicht auf das dargestellte Ausführungsbeispiel beschränkt:

So kann das Achslagergehäuse mit einer Gummiwandung versehen sein, die den zylindrischen Hohlraum für die Schraubverbindung begrenzt. Hierdurch wird neben der erörterten Schwenkbewegung 22 auch eine gegenüber der Schwenkachse 20 radiale Verstellbewegung ermöglicht, was einen weiteren Ausgleichsspielraum für externe Kräfte bzw. Stöße K ergibt.

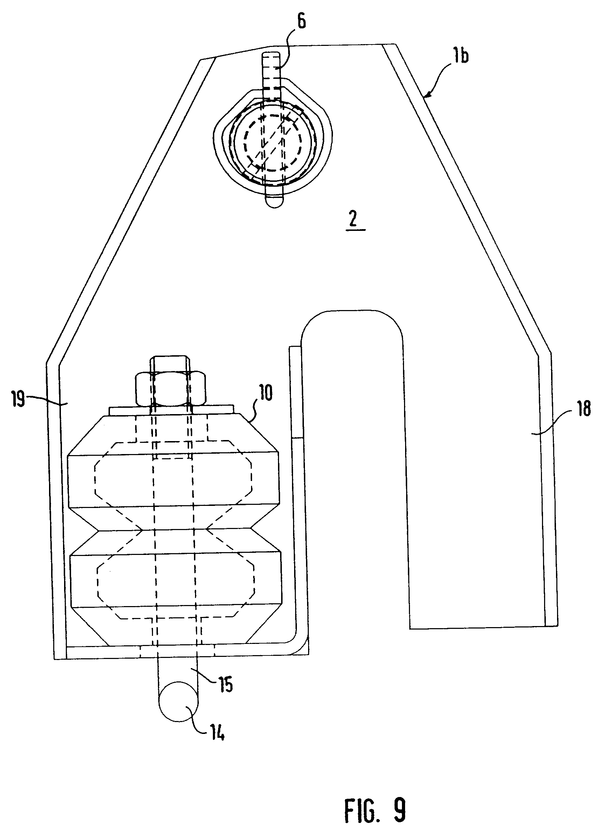

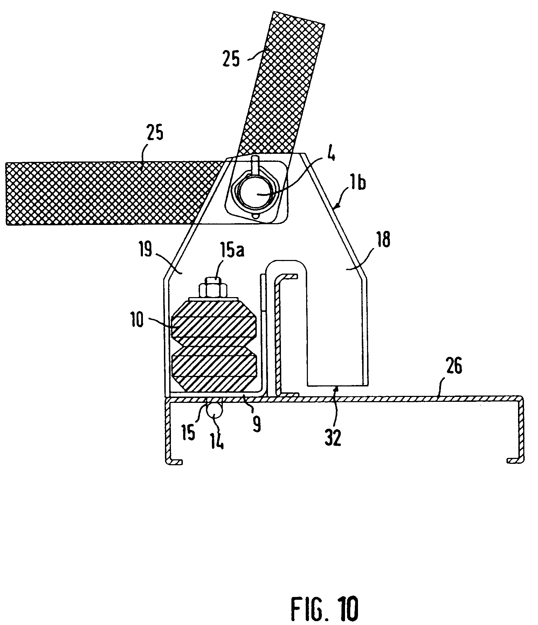

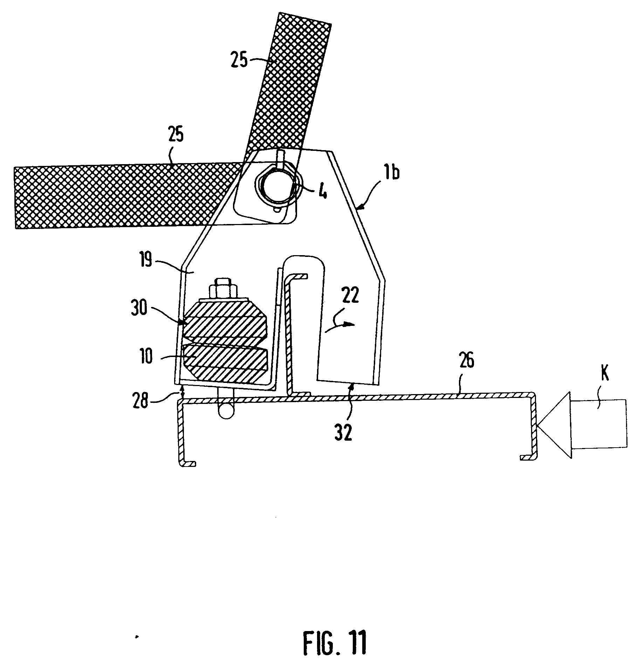

Eine im Rahmen der Erfindung liegende, vereinfachte Ausführung besteht gemäß Fig. 9 - 11 darin, beim ersten Schenkel das daran angebrachte Gelenk 13 wegzulassen. Bereits die Gummihohlfeder 10 allein kann ausreichende Ausgleichbewegungen (Verschwenkung 22, Abheben 28) grundsätzlich in ausreichendem Umfang ermöglichen. Im gezeichneten Beispiel dient der erste Schenkel 18 als Anschlagteil mit dem Rahmenteil 26 des Maschinenaggregats zugewandter Anschlagfläche 32 und möglicherweise auch als Trag- und Montagegriff. Zu diesem Zweck ist der Schenkel 18 gegenüber dem zweiten Schenkel 19 in seiner Länge verkürzt, so daß bei Auslenkung um die Gummihohlfeder 10 als kombinierte Gelenk- und Verschiebestelle noch ein ausreichend freier Spielraum zwischen dem Rahmenteil 26 und der Schenkelanschlagfläche 32 zur Verfügung steht. Ein derart vereinfachtes Kuppelelement ist vor allem zum Einsatz bzw. zur Aufhängung von Sichelmähwerken denkbar.

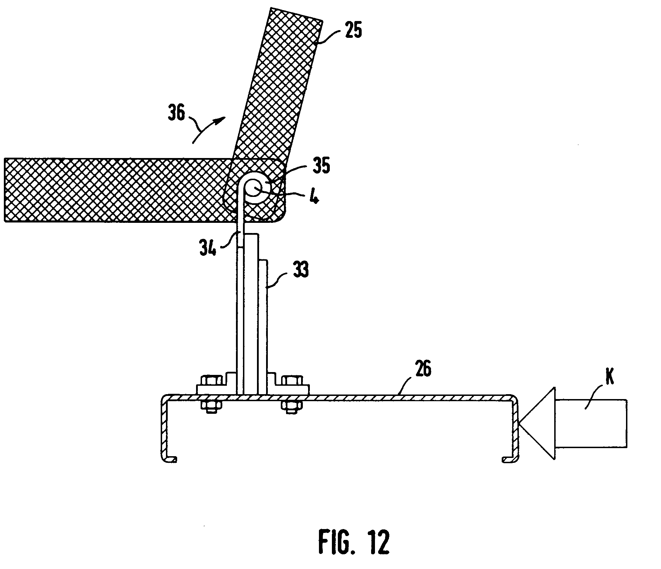

Gemäß Fig. 12 sind Rückwand, Vorderwand und Bodenwand 7, 8, 9 weggelassen sowie die Gummihohlfeder 10 durch eine Blattfeder 33 ersetzt. Diese stellt kombiniert eine federnd gedämpfte Gelenk-, Verschiebe- und Verbindungsstelle zwischen dem Rahmenteil 26 eines Maschinenaggregats und dem Fahrzeug-Rüstbock 25 dar. Die Blattfeder 33 besitzt noch eine obere Erweiterung 34, die über eine hakenartige Biegung 35 an dem Verbindungsbolzen 4 des Rüstbocks 25 gelenkig aufgehängt ist. Stößt das Maschinenaggregat bzw. dessen Rahmenteil 26 auf externe Hindernisse, wird einerseits die Blattfeder 33 entsprechend verbogen und zusätzlich eine Verschwenkung 36 um den Verbindungsbolzen 4 herbeigeführt. Dadurch kann sich der Verbindungsbolzen 4 als Gelenkstelle bzw. Bewegungs- element gegenüber dem Maschinenaggregat bzw. Rahmenteil 26 auch radial verschieben und so Stoßkräfte K auf das Rahmenteil 26 besser kompensieren.

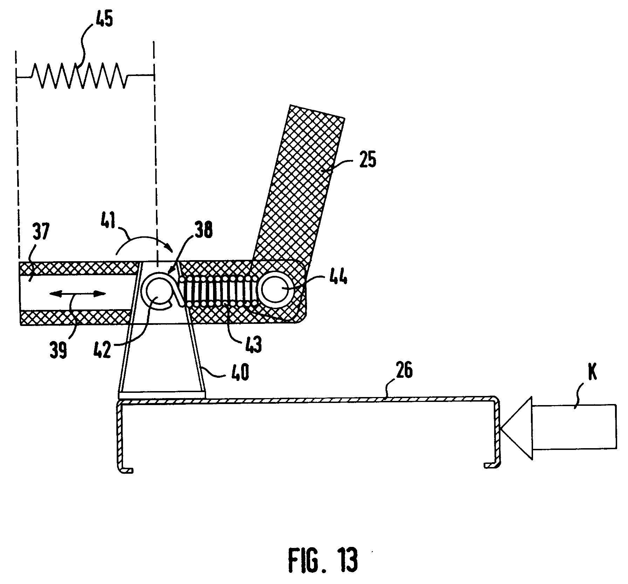

Gemäß Fig. 13 ist im Fahrzeug-Rüstbock 25 eine horizontal verlaufende Linearführung 37 ausgebildet (schematisch dargestellt). In dieser Linearführung ist eine Biege- oder Gelenkstelle 38 in waagrechter Verschieberichtung 39 hin- und herbewegbar gelagert. Um die Biege- oder Gelenkstelle 38 kann einem Tragbügel 40, der mit dem Maschinenaggregat-Rahmenteil 26 ortsfest verbunden ist, eine Schwenkbewegung 41 erteilt werden, wenn aufgrund externer Hindernisse eine Stoßkraft K auf das Rahmenteil 26 wirkt. Um einen Zapfen 42 der Biege- oder Gelenkstelle 38 ist das Ende einer schraubenförmigen Zugfeder 43 eingehängt. Deren anderes, entgegengesetztes Ende ist an einem ortsfesten Vorsprung 44 des Fahrzeug-Rüstbocks 25 eingehängt. Bei Auftreten einer Stoßkraft K wird dem Tragbügel 40 mit dem daran befestigten Rahmenteil 26 eine Schwenkbewegung 41 um die Biege- oder Gelenkstelle 38 bzw. Zapfen 42 erteilt; gleichzeitig wird dem Tragbügel bzw. der Gelenkstelle eine Verschiebebewegung 39 aufgezwungen, so daß das Maschinenaggregat 26 seine Relativlage gegenüber dem Fahrzeug-Rüstbock 25 nicht nur rotatorisch, sondern auch translatorisch verändert. Mit anderen Worten, die als Bewegungselement dienende Linearführung 37 verändert ihre Relativlage gegenüber dem Maschinenaggregat 26 bzw. die Gelenkstelle 38 ihre Relativlage gegenüber dem Rüstbock 25. Durch diese Kombination von rotatorischer und translatorischer Ausgleichsbewegung werden die Lager- komponenten sowohl der Linearführung 37 als auch der Gelenkstelle 38 bei Auftreten einer externen Stoßkraft K vor schädlichen Belastungen weitgehend geschont. Das Federelement 43 wirkt dabei der Verschiebebewegung 39 entgegen und dämpft so die Stoßkraft K; gleichzeitig kann sie für eine Umkehrung der Verschieberichtung 39 bzw. Rückstellung des Tragbügels 40 mit Gelenkstelle 38 in die Ausgangslage sorgen. Die Rückstellung und Stoßkompensation läßt sich noch zusätzlich durch eine (schematisch angedeutete) Druckfeder 45 fördern, die entsprechend der Zugfeder 43, jedoch auf der entgegengesetzten Seite, eingebaut ist.

## Patentansprüche

1. Kupplung, die an ein Mähwerk (26), insbesondere ein Sichelmähwerk, einerseits und an den Rüstbock (25) eines Nutzfahrzeugs andererseits gekuppelt ist, um diese Teile beweglich miteinander zu verbinden, umfassend ein oder mehrere, zwischen Mähwerk (26) und Rüstbock (25) angeordnete Kupplungselemente (1a, 1b; 33, 34; 38) mit je einem oder mehreren Bewegungselementen (13; 10; 33; 37) zum beweglichen Anschluß an einem der miteinander zu verbindenden Maschinenteile (26; 25), sowie mit je einem Dämpfer- und/oder Federelement (10; 33; 43), das einer Bewegung des betreffenden Kupplungselements gegenüber dem betreffenden Maschinenteil (26; 25) entgegenwirkt, **dadurch gekennzeichnet**, daß am Kupplungselement (1a, 1b; 33, 34; 38) ein Drehgelenk (4; 38, 42) mit einer gegenüber der Fahrtrichtung schräg oder quer verlaufenden Achse (4; 42) zur verschwenkbaren Anlenkung des Kupplungselements (1a, 1b; 33, 34; 38) an einer einzigen Stelle des jeweils anderen Maschinenteils (25; 26) angeordnet ist, derart, daß das Mähwerk (26) bei einem Stoß (K) entgegen der Fahrtrichtung gegenüber dem Rüstbock (25) eine etwa translatorische, durch das Dämpferund/oder Federelement (10; 33; 43) gedämpfte Ausgleichsbewegung ausführt, ansonsten in seiner Lage jedoch weitgehend unverändert bleibt.

2. Kupplung nach Anspruch 1, dadurch gekennzeichnet, daß das Bewegungselement als Linearführung (37), Biege- (33), Schwenk- (10) oder Drehgelenk (13) ausgebildet ist.

3. Kupplung nach Anspruch 1 oder 2, dadurch gekennzeichnet, daß das Bewegungselement (10) zur Herbeiführung sowohl einer rotatorischen bzw. Dreh- als auch einer Linearverschiebebewegung ausgebildet ist.

4. Kupplung nach einem der Ansprüche 1 bis 3, dadurch gekennzeichnet, daß das oder die Dämpfer- und/oder Federelemente mittels Gummihohlfedern (10), Blattfedern (33), Schraubenfedern (43) und/oder Kegelfedern realisiert sind.

5. Kupplung nach einem der vorhergehenden Ansprüche, dadurch gekennzeichnet, daß das Bewegungselement (10, 33) mit dem Dämpfer- und/oder Federelement baulich integriert und/oder einstückig ausgeführt ist.

6. Kupplung nach einem der vorhergehenden Ansprüche, dadurch gekennzeichnet, daß das Bewegungselement (33; 37) und/oder das Drehgelenk (4) als für den Fahrzeug-Rüstbock (25) und/oder das Mähwerk (26) jeweils ortsfeste Verbindungsglieder ausgeführt sind.

7. Kupplung nach einem der vorhergehenden Ansprüche, gekennzeichnet durch ein die Schwenkachse bildendes Verbindungsglied (20), das im Gelenk (13) radial federnd gelagert, insbesondere von einem Gummilager umgeben ist.

8. Kupplung nach einem der vorhergehenden Ansprüche, gekennzeichnet durch einen die Schwenkbewegung (22) und/oder korrespondierende Federelement-Auslenkungen (28) detektierenden Sensor zur Erzeugung eines elektrischen Schaltsignals.

9. Kupplung nach einem der vorangehenden Ansprüche, gekennzeichnet durch zwei miteinander starr verbundene Schenkel (18,19), welche in ihrem Verbindungsbereich (2) mit einem gemeinsamen Tragelement (4) für den Eingriff am Rüstbock (25) versehen sind, wobei jeweils am Mähwerk (26) das freie Ende des ersten Schenkels (18) über das Gelenk (13) drehbar (22), und das freie Ende des zweiten Schenkels (19) über das Federelement (10) verstellbar angeordnet sind.

10. Kupplung nach Anspruch 9, dadurch gekennzeichnet, daß das Federelement (10) als hohlzylindrische Gummifeder und/oder Schraubenfeder ausgeführt ist, die an ihrem einen Stirnende mit dem Mähwerk (26) und an ihrem anderen Stirnende mit dem zweiten Schenkel (19) verbunden ist.

11. Kupplung nach Anspruch 10, gekennzeichnet durch vom zweiten Schenkel (19) etwa parallel zur Schwenkachse (20) vorspringende Boden- und Seitenwände (7,8,9), welche die Schrauben- oder Gummifeder (10) an ihrer unteren Stirnseite (29) und an ihrem Außenmantel (30) untergreifen und umfassen, wobei ihre obere Stirnseite (31) über eine Schraubverbindung (15,16,17), welche durch die Schrauben- oder Gummifeder (10) und die Bodenwand (9) geführt ist, mit dem Mähwerk (26) verbunden ist.

12. Kupplung nach einem der Ansprüche 9 bis 11, gekennzeichnet durch mehrere separate Schenkelverbunde (1a, 1b), die bezüglich einer schräg oder quer zur Schwenkachse (20) verlaufenden Mittelebene (23) symmetrisch angeordnet sind.

13. Kupplung nach Anspruch 12, dadurch gekennzeichnet, daß das Tragelement als zwei Schenkelverbunde (1a, 1b) durchsetzender Verbindungsbolzen (4) ausgeführt ist.

14. Kupplung nach Anspruch 12 oder 13, gekennzeichnet durch ein jeweils an den einander zugewandten Innenseiten gegenüberliegender Schenkelverbunde (1a, 1b) anliegendes Distanzstück (24).

15. Kupplung nach Anspruch 12, 13 oder 14, dadurch gekennzeichnet, daß das Gelenk (13) zwischen den jeweils ersten Schenkeln (18) zweier gegenüberliegender Schenkelverbunde (1a, 1b) angeordnet, insbesondere als Distanzstück (24) ausgeführt ist.

16. Kupplung nach Anspruch 15, dadurch gekennzeichnet, daß das Gelenk (13) eine die Dreh- oder Schwenkachse (20) bildende Schraubverbindung (20) aufweist, welche die beiden ersten Schenke (18) der gegenüberliegenden Schenkelverbunde (1a, 1b) hintergreift.

17. Kupplung nach Anspruch 9 oder 10 und einem der Ansprüche 11 bis 15, dadurch gekennzeichnet, daß die Schraubverbindungen (15, 16, 17) der Schrauben- oder Gummifedern (10) unterschiedlicher Schenkelverbunde (1a, 1b) miteinander verstrebt (14) sind.

18. Kupplung nach Anspruch 17, dadurch gekennzeichnet, daß die Schraubverbindungen (15,16,17) zweier paarweise symmetrisch angeordneter Schrauben- oder Gummifedern (10) unterschiedlicher Schenkelverbunde (1a,1b) durch eine das Mähwerk untergreifende Stange oder Strebe (14), vorzugsweise parallel zur Schwenkachse (20), verbunden sind.

19. Kupplung nach einem der Ansprüche 9 bis 18, gekennzeichnet durch eine einschenklige Ausführung, bei der der Schenkelverbund (1a, 1b) aufgelöst beziehungsweise nur mit dem zweiten Schenkel (19) unter Weglassen des ersten Schenkels oder wenigstens des zugehörigen Gelenks (13, 20) ausgebildet ist.

## Claims

1. Coupling which is coupled to a mower (26), in particular a rotary mower, on the one hand and to the assembly bracket (25) of a commercial vehicle on the other in order to join these parts movably together, comprising one or more coupling elements (1a, 1b; 33, 34; 38) with one or more respective moving elements (13; 10; 33; 37) for the movable attachment to one of the machine parts (26; 25) to be connected together, and comprising a respective damper and/or spring element (10; 33; 43), which counteracts a movement of the respective coupling element with respect to the relevant machine part (26; 25), characterised in that on the coupling element (1a, 1b; 33, 34; 38) a rotary joint (4; 38, 42) with a shaft (4; 42) extending obliquely or transverse to the direction of travel is disposed on a single spot on the respective other machine part (25; 26) for the pivoting coupling of the coupling element (1a, 1b; 33, 34; 38) in such a manner that the mower (26) upon impact (K) in the direction opposite that of travel performs relative to the assembly bracket (25) a roughly translational compensating movement damped by the spring element (10; 33; 43), but otherwise remains substantially in the same position.

2. Coupling according to claim 1, characterised in that the moving element is formed as a linear guide (37), bending (33), pivoting (10) or rotary joint (13).

3. Coupling according to claim 1 or 2, characterised in that the moving element (10) is formed so as to bring about both a rotational as well as a linear displacement movement.

4. Coupling according to one of claims 1 to 3, characterised in that the dampers and/or spring elements are realised by means of hollow rubber springs (10), leaf springs (33), helical springs (43) and/or conical springs.

5. Coupling according to one of the preceding claims, characterised in that the moving element (10, 33) is structurally incorporated in and/or is integral with the damper and/or spring element.

6. Coupling according to one of the preceding claims, characterised in that the moving element (33, 37) and/or the rotary joint (4) are formed as respectively fixed connecting elements for the vehicle assembly bracket (25) and/or the mower (26).

7. Coupling according to one of the preceding claims, characterised by a connecting member (20) which forms the pivotal shaft and which is supported in the joint (13) in a radially resilient manner, in particular is surrounded by a rubber bearing.

8. Coupling according to one of the preceding claims, characterised by a sensor for generating an electrical switching signal and detecting the pivotal movement (22) and/or corresponding pivoting out (28) of the spring element.

9. Coupling according to one of the preceding claims, characterised by two shanks (18, 19) rigidly connected together, which are provided in their joining region (2) with a common support element (4) for engagement with the assembly bracket (25), and on the mower (26) the free end of the first shank (18) is rotatable via the joint (13) and the free end of the second shank (19) is adjustable via the spring element (10).

10. Coupling according to claim 9, characterised in that the spring element (10) is formed as a hollow-cylindrical rubber spring and/or helical spring, which is connected at its one end to the mower (26) and at the other end to the second shank (19).

11. Coupling according to claim 10, characterised by base and side walls (7, 8, 9) projecting from the second shank (19) roughly parallel to the pivotal shaft (20) and engaging and enclosing the helical or rubber spring (10) on its lower end face (29) and its outer surface (30), its upper end face (31) being connected to the mower (26) via a screw connection (15, 16, 17), which is guided by the helical or rubber spring (10) and the base wall (9).

12. Coupling according to one of claims 9 to 11, characterised by a plurality of separate shank composites (1a, 1b) which are disposed symmetrically with respect to a middle plane (23) extending obliquely or transverse to the pivotal shaft (20).

13. Coupling according to claim 12, characterised in that the support element is formed as connecting pins (4) penetrating two shank composites (1a, 1b).

14. Coupling according to claim 12 or 13, characterised by a spacer (24) bearing on the mutually facing inner faces of opposite shank composites (1a, 1b).

15. Coupling according to claim 12, 13 or 14, characterised in that the joint (13) is disposed between the respective first shanks (18) of two opposite shank composites (1a, 1b), in particular is formed as a spacer (24).

16. Coupling according to claim 15, characterised in that the joint (13) has a screw connection (20) forming the rotary or pivotal axis (20) and engaging behind the two first shanks (18) of the opposite shank composites (1a, 1b).

17. Coupling according to claim 9 or 10 and one of claims 11 to 15, characterised in that the screw connections (15, 16, 17) of the helical or rubber springs (10) are different shank composites (1a, 1b) braced together.

18. Coupling according to claim 17, characterised in that the screw connections (15, 16, 17) of two helical or rubber springs (10) disposed symmetrically in pairs of different shank composites (1a, 1b) are joined by a rod or strut (14) engaging under the mower, preferably parallel to the pivotal shaft (20).

19. Coupling according to one of claims 9 to 18, characterised by a single-shank configuration, in which the shank composite (1a, 1b) is done away with or is only formed with the second shank (19), omitting the first shank or at least the associated joint (13, 20).

## Revendications

1. Accouplement, qui est couplé à une faucheuse (26), notamment une faucheuse à barre de coupe, d'une part, et au support de montage (25) d'un véhicule de servitude, d'autre part, en vue de relier de manière mobile ces pièces l'une à l'autre, comprenant un ou plusieurs éléments d'accouplement (1a, 1b; 33, 34; 38), qui sont disposés entre la faucheuse (26) et le support de montage (25), comportent chacun un ou plusieurs éléments de mouvement (13; 10; 33; 37) destinés au raccordement mobile à l'une des pièces de machine (26; 25) à relier l'une à l'autre, et comportent chacun un élément amortisseur et/ou élastique (10; 33; 43) qui agit à l'encontre d'un mouvement de l'élément d'accouplement considéré par rapport à la pièce de machine (26; 25) considérée, caractérisé en ce que sur l'élément d'accouplement (1a, 1b; 33, 34; 38), est disposée une articulation de rotation (4; 38, 42) qui présente un axe (4; 42) s'étendant obliquement ou transversalement par rapport à la direction de marche, pour réaliser l'articulation pivotante de l'élément d'accouplement (1a, 1b; 33, 34; 38) en un seul endroit de l'autre pièce de machine respective (25; 26), d'une manière telle que la faucheuse (26), dans le cas d'un choc (K) en sens opposé à la direction de marche, effectue, par rapport au support de montage (25), un mouvement de compensation, sensiblement en translation, amorti par l'élément élastique (10; 33; 43), mais conserve sinon sa position dans une large mesure invariable.

2. Accouplement selon la revendication 1, caractérisé en ce que l'élément de mouvement est conçu sous forme de guidage linéaire (37), d'articulation de flexion (33), d'articulation de pivotement (10) ou d'articulation de rotation (13).

3. Accouplement selon la revendication 1 ou 2, caractérisé en ce que l'élément de mouvement (10) est conçu pour engendrer aussi bien un mouvement tournant ou de rotation, qu'un mouvement de coulissement linéaire.

4. Accouplement selon l'une des revendications 1 à 3, caractérisé en ce que le ou les éléments amortisseurs et/ou élastiques sont réalisés au moyen de ressorts en caoutchouc creux (10), de ressorts à lame (33), de ressorts hélicoïdaux (43) et/ou de ressorts coniques.

5. Accouplement selon l'une des revendications précédentes, caractérisé en ce que l'élément de mouvement (10, 33) est intégré par construction et/ou réalisé d'un seul tenant avec l'élément amortisseur et/ou élastique.

6. Accouplement selon l'une des revendications précédentes caractérisé en ce que l'élément de mouvement (33; 37) et/ou l'articulation de rotation (4) sont réalisés sous forme d'organes de liaison en position fixe, respectivement pour le support de montage (25) du véhicule et/ou la faucheuse (26).

7. Accouplement selon l'une des revendications précédentes, caractérisé par un organe de liaison (20) qui forme l'axe de pivotement, et qui est monté dans l'articulation (13) de manière élastique en direction radiale, notamment en étant entouré d'un palier en caoutchouc.

8. Accouplement selon l'une des revendications précédentes, caractérisé par un détecteur détectant le mouvement de pivotement (22) et/ou des déviations correspondantes de l'élément élastique, en vue de produire un signal de commande électrique.

9. Accouplement selon l'une des revendications précédentes, caractérisé par deux branches (18, 19) reliées de manière rigide l'une à l'autre, qui dans leur zone de liaison (2) sont pourvues d'un élément porteur commun (4) pour l'accrochage au support de montage (25), l'extrémité libre de la première branche (18) étant montée en rotation (22), par l'intermédiaire de l'articulation (13), sur la faucheuse (26), et l'extrémité libre de la seconde branche (19) étant montée déplaçable, par l'intermédiaire de l'élément élastique (10), également sur la faucheuse (26).

10. Accouplement selon la revendication 9, caractérisé en ce que l'élément élastique (10) est réalisé sous la forme d'un ressort en caoutchouc cylindrique creux et/ou d'un ressort hélicoïdal, qui est relié, à l'une de ses extrémités frontales, à la faucheuse (26) et, à son autre extrémité frontale, à la seconde branche (19).

11. Accouplement selon la revendication 10, caractérisé par des parois latérales et de fond (7, 8, 9), qui font saillie sur la seconde branche (19), sensiblement parallèlement à l'axe de pivotement (20), et qui soutiennent et entourent le ressort hélicoïdal ou le ressort en caoutchouc (10) sur sa face frontale inférieure (29) et sur sa surface périphérique extérieure (30), sa face frontale supérieure (31) étant reliée à la faucheuse (26), par l'intermédiaire d'une liaison vissée (15, 16, 17), qui est guidée par le ressort hélicoïdal ou le ressort en caoutchouc (10) et la paroi de fond (9).

12. Accouplement selon l'une des revendications 9 à 11, caractérisé par plusieurs ensembles de branches séparés (1a, 1b), qui sont disposés de manière symétrique par rapport à un plan médian (23) s'étendant obliquement ou transversalement par rapport à l'axe de pivotement (20).

13. Accouplement selon la revendication 12, caractérisé en ce que l'élément porteur est réalisé sous la forme d'une broche de liaison (4) traversant deux ensembles de branches (1a, 1b).

14. Accouplement selon la revendication 12 ou 13, caractérisé par une pièce-entretoise (24) s'appuyant sur les faces intérieures en regard l'une de l'autre, d'ensembles de branches opposés (1a, 1b).

15. Accouplement selon la revendication 12, 13 ou 14, caractérisé en ce que l'articulation (13) est disposée, notamment sous la forme d'une pièce-entretoise (24), entre les premières branches respectives (18) de deux ensembles de branches opposés (1a, 1b).

16. Accouplement selon la revendication 15, caractérisé en ce que l'articulation (13) présente une liaison vissée (20), qui définit l'axe de rotation ou de pivotement (20) et qui s'engage derrière les deux premières branches (18) des ensembles de branches opposés (1a, 1b).

17. Accouplement selon la revendication 9 ou 10 et l'une des revendications 11 à 15, caractérisé en ce que les liaisons vissées (15, 16, 17) des ressorts hélicoïdaux ou des ressorts en caoutchouc (10) d'ensembles de branches différents (1a, 1b), sont solidarisées par un renfort (14).

18. Accouplement selon la revendication 17, caractérisé en ce que les liaisons vissées (15, 16, 17) de deux ressorts hélicoïdaux ou ressorts en caoutchouc (10), disposés symétriquement par paires, d'ensembles de branches différents (1a, 1b), sont reliées par une tige ou un renfort (14) passant sous la faucheuse, de préférence parallèlement à l'axe de pivotement (20).

19. Accouplement selon l'une des revendications 9 à 18, caractérisé par un mode de réalisation à une seule branche, dans lequel l'ensemble de branches (1a, 1b) est d'une configuration séparée, ou est réalisé de façon à ne comporter que la seconde branche (19) par suppression de la première branche ou au moins de l'articulation associée (13, 20).
